(19) Europäisches Patentamt

European Patent Office

Office européen des brevets

(11) **EP 4 679 945 A1**

(12) **EUROPEAN PATENT APPLICATION**

(43) Date of publication:
    **14.01.2026  Bulletin 2026/03**

(21) Application number: **25173079.2**

(22) Date of filing: **29.04.2025**

(51) International Patent Classification (IPC):
    **H05K 1/11** (2006.01)      **H01L 23/498** (2006.01)

(52) Cooperative Patent Classification (CPC):
    **H05K 1/111; G06F 30/392; G06F 30/3953;
    H01L 23/49838;** G06F 2113/18; G06F 2115/12;
    H05K 1/114; H05K 2201/094; H05K 2201/09409;
    H05K 2201/10159; H05K 2201/10734

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH LA MA MD TN**

(30) Priority:  **11.07.2024  TW 113125967**

(71) Applicant: **Realtek Semiconductor Corp.
    HsinChu 30076 (TW)**

(72) Inventors:
    • **Lai, Chao-Min**
      **30076 HsinChu (TW)**
    • **Yen, Shou-Te**
      **30076 HsinChu (TW)**
    • **Lin, Yu-Jen**
      **30076 HsinChu (TW)**
    • **Wang, Ping-Chia**
      **30076 HsinChu (TW)**

(74) Representative: **Straus, Alexander
    2K Patentanwälte - München
    Bajuwarenring 14
    82041 Oberhaching (DE)**

(54) **METHOD OF USING OPTIMIZED PITCH FOR INSTALLING PROCESSING CIRCUIT AT PRINTED CIRCUIT BOARD, AND ASSOCIATED APPARATUS**

(57)     A method of using optimized pitch for installing a processing circuit (110) at a printed circuit board (PCB) (100B) and associated apparatus are provided. The method may include: providing a set of first terminals (111_1) on a predetermined surface (110S) of a package (110P) of the processing circuit, the set of first terminals corresponding to a set of first pads (101_1) within a first sub-region (610) of a predetermined installation region (201) of the PCB; and providing a set of second terminals (111_2) on the predetermined surface of the package of the processing circuit, the set of second terminals corresponding to a set of second pads (101_2) within a second sub-region (620) of the predetermined installation region, where a pitch (X_Pitch1, Y_Pitch1) of the first terminals and a pitch (X_Pitch2, Y_Pitch2) of the second terminals along a predetermined direction are equal to a first and a second predetermined values, respectively.

FIG. 6

**Description**

Field of the Invention

The present invention is related to a method of using optimized pitch for installing a processing circuit at a printed circuit board (PCB) and associated apparatus such as the processing circuit and the PCB according to the pre-characterizing clauses of claims 1, 9 and 10.

Background of the Invention

According to the related art, a memory package complying with low-power double data rate (LPDDR) standards such as the LPDDR5/LPDDR5X standards may be coupled to a PCB through 15 columns × 21 rows of solder balls (or "balls") in a certain configuration, with the ball pitch thereof such as the pitch along the X-axis and the pitch along the Y-axis being equal to 0.8 millimeters (mm) and 0.7 mm, respectively. For example, when the ball pitch of a package of a system-on-chip (SoC) along the X-axis and the Y-axis is equal to 0.65 mm, if a large number of vias are arranged in an SoC installation region on the PCB, it is difficult to route traces between these vias. Assuming that the ball pitch of the SoC package is increased to be the same as a certain ball pitch of the memory package, the package area of the SoC will be greatly increased. Thus, a novel method and associated architecture are needed for solving these problems in a way that is less likely to introduce a side effect.

Summary of the Invention

This in mind, the present invention aims at providing a method of using optimized pitch for installing a processing circuit at a PCB and associated apparatus such as the processing circuit and the PCB.

This is achieved by a method of using optimized pitch for installing a processing circuit at a PCB and associated apparatus according to the pre-characterizing clauses of claims 1, 9 and 10. The dependent claims pertain to corresponding further developments and improvements.

In one aspect, the disclosure features a method of using optimized pitch for installing a processing circuit at a PCB, where the PCB has a predetermined installation region for installing the processing circuit. The method may comprise: providing a set of first terminals on a predetermined surface of a package of the processing circuit, the set of first terminals corresponding to a set of first pads within a first sub-region of the predetermined installation region, wherein a first pitch of the set of first terminals along a predetermined direction on the predetermined surface is equal to a first predetermined value; and providing a set of second terminals on the predetermined surface of the package of the processing circuit, the set of second terminals corresponding to a set of second pads within a second sub-region of the predetermined installation region, wherein a second pitch of the set of second terminals along the predetermined direction on the predetermined surface is equal to a second predetermined value, and the second predetermined value is not equal to the first predetermined value. For example, the PCB may be arranged to install the processing circuit and a random access memory. More particularly, in a three-dimensional (3D) space corresponding to an X-axis, a Y-axis and a Z-axis that are orthogonal to each other, in a situation where a normal vector of the predetermined installation region is parallel to the Z-axis and the processing circuit and the random access memory are arranged along a direction of the X-axis on the PCB, the predetermined direction may represent a direction of any axis among the X-axis and the Y-axis.

In one aspect, the disclosure features a processing circuit whose package is implemented according to the above method, where the package of the processing circuit may comprise: the set of first terminals, positioned in a first sub-region of a terminal region on the predetermined surface, wherein the first sub-region of the terminal region and the first sub-region of the predetermined installation region correspond to each other; and the set of second terminals, positioned in a second sub-region of the terminal region on the predetermined surface, wherein the second sub-region of the terminal region and the second sub-region of the predetermined installation region correspond to each other.

In one aspect, the disclosure features a PCB whose multiple pads such as soldering pads are implemented according to the above method, where the multiple pads of the PCB may comprise: the set of first pads, positioned in the first sub-region of the predetermined installation region; and the set of second pads, positioned in the second sub-region of the predetermined installation region.

It is an advantage of the present invention that, through proper design, the method, the processing circuit and the PCB of the present invention can achieve package area minimization of the processing circuit without significantly increasing the associated costs such as the material costs (e.g., the PCB costs). For example, the processing circuit can be an SoC, the PCB can be arranged to install the processing circuit such as the SoC and the random access memory such as an LPDDR fifth generation or above (LPDDR 5 or above) random access memory, and the above-mentioned optimized pitch can represent the optimized SoC ball pitch for LPDDR5 designs (e.g., the LPDDR5/5X designs). In addition, the method, the processing circuit and the PCB of the present invention can solve the problems in the related art in a way that is less likely to introduce a side effect.

Brief Description of the Drawings

In the following, the invention is further illustrated by way of example, taking reference to the accompanying drawings. Thereof

FIG. 1    is a schematic diagram of an electronic device according to an embodiment of the present invention, where the electronic device is implemented based on a method of using optimized pitch for installing a processing circuit at a PCB in the present invention,
FIG. 2    illustrates a circuit architecture control scheme of the method according to an embodiment of the present invention,
FIG. 3    illustrates a first layer involved with the circuit architecture control scheme shown in FIG. 2,
FIG. 4    illustrates a third layer involved with the circuit architecture control scheme shown in FIG. 2,
FIG. 5    illustrates a fifth layer involved with the circuit architecture control scheme shown in FIG. 2,
FIG. 6    illustrates some pitches involved with the circuit architecture control scheme shown in FIG. 2 according to an embodiment of the present invention,
FIG. 7    illustrates some terminals involved with the circuit architecture control scheme shown in FIG. 2 according to an embodiment of the present invention,
FIG. 8    illustrates the associated pitches of the terminals shown in FIG. 7, and
FIG. 9    illustrates a flowchart of the method according to an embodiment of the present invention.

Detailed Description

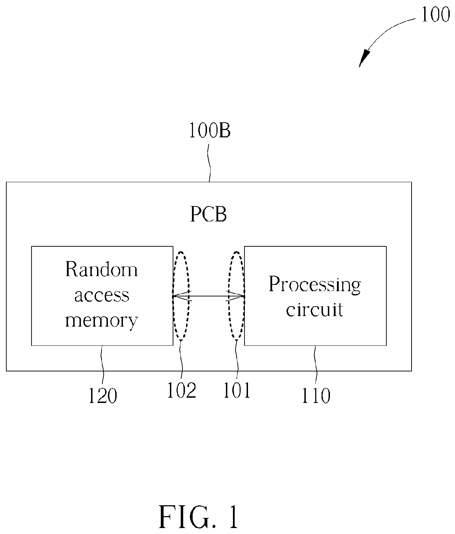

FIG. 1 is a schematic diagram of an electronic device 100 according to an embodiment of the present invention, where the electronic device 100 is implemented based on a method of using optimized pitch for installing a processing circuit (e.g., the processing circuit 110) at a PCB (e.g., the PCB 100B) in the present invention. As shown in FIG. 1, the electronic device 100 may comprise a processing circuit 110, a random access memory 120, and a PCB 100B for installing or mounting the processing circuit 110 and the random access memory 120. The processing circuit 110 may control operations of the electronic device 100, and the random access memory 120 may store information for the electronic device 100 (or the processing circuit 110). In addition, the PCB 100B may comprise a plurality of pads, such as multiple pads 101 for coupling the processing circuit 110 to the PCB 100B and multiple pads 102 for coupling the random access memory 120 to the PCB 100B. Multiple terminals of the processing circuit 110 may be connected to the multiple pads 101, respectively, and multiple terminals of the random access memory 120 may be connected to the multiple pads 102, respectively. The processing circuit 110 and the random access memory 120 may be coupled to each other through the PCB 100B, at least one portion of pads (e.g., a portion of pads or all pads) among the multiple pads 101, and at least one portion of pads (e.g., a portion of pads or all pads) among the multiple pads 102. Examples of the electronic device 100 may include, but are not limited to: a portable electronic device, a multifunctional mobile phone and a wearable device. Examples of the processing circuit 110 may include, but are not limited to: an application processor (AP) and a central processing unit (CPU).

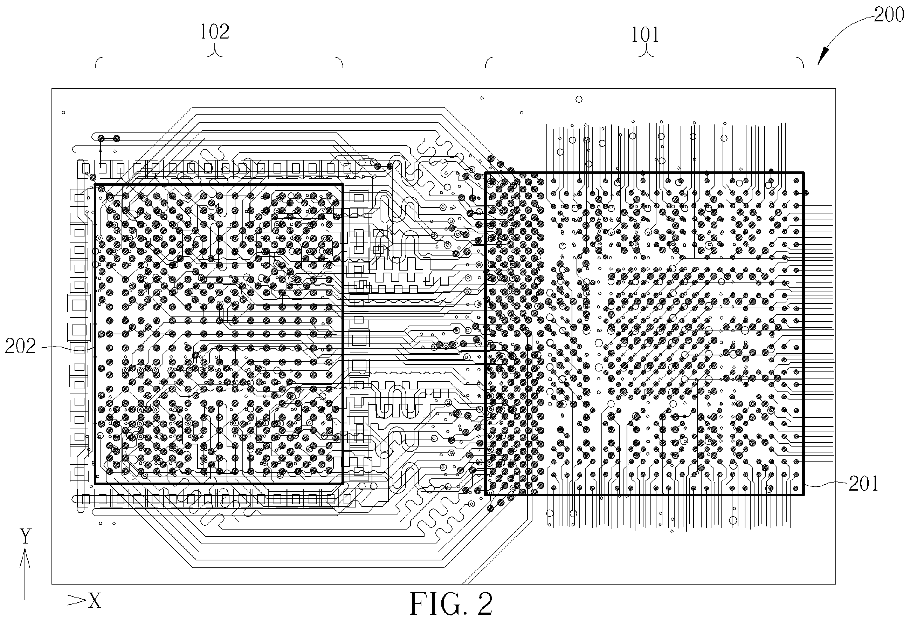

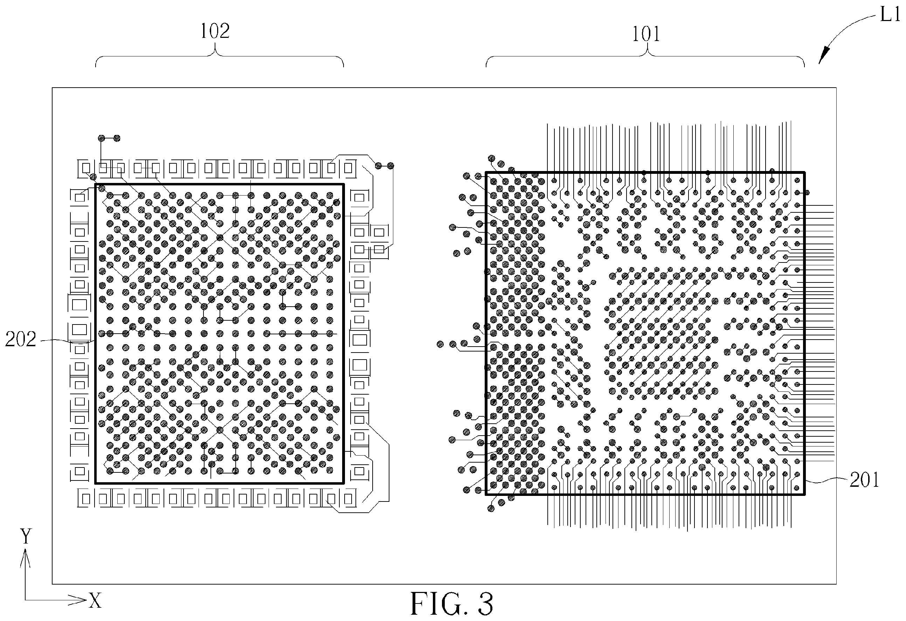

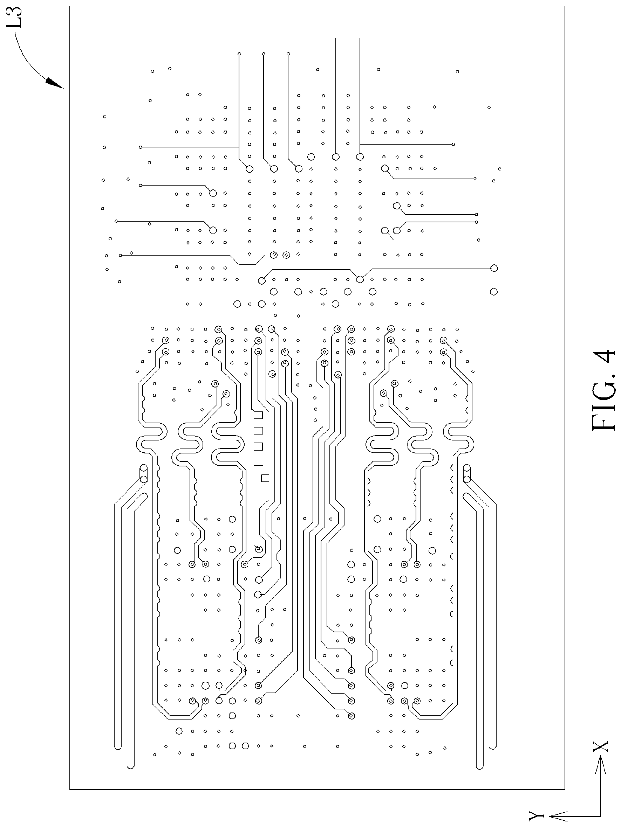

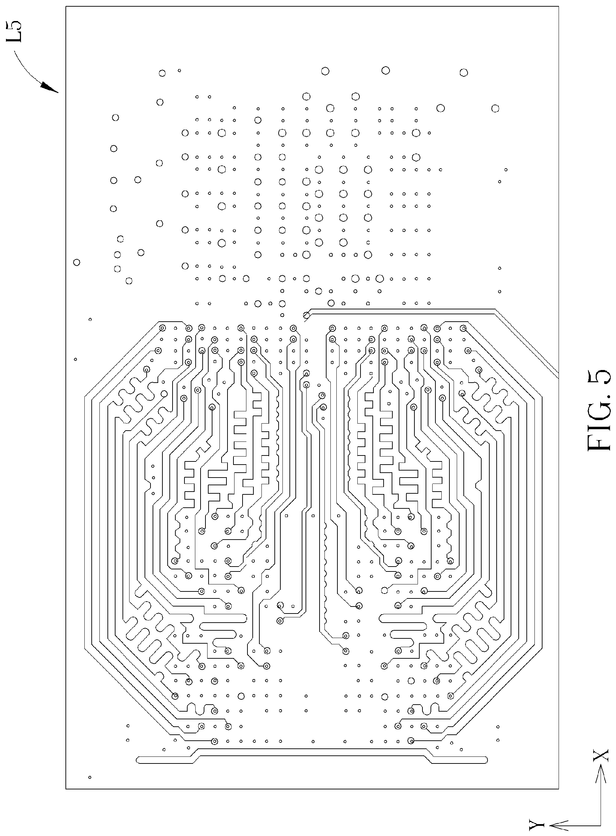

FIG. 2 illustrates a circuit architecture control scheme of the method according to an embodiment of the present invention, and FIG. 3, FIG. 4 and FIG. 5 illustrate a first layer, a third layer and a fifth layer, such as three layers L1, L3 and L5 among five layers of circuits (or "the five-layer circuit"), involved with the circuit architecture control scheme shown in FIG. 2, respectively, where the remaining two layers (i.e., the second layer and the fourth layer) within the five-layer circuit may be arranged to isolate the above-mentioned three layers L1, L3 and L5, and may be regarded as isolation layers. The PCB 100B may comprise the circuit structure 200 shown in FIG. 2, and the circuit structure 200 may comprise the above-mentioned five-layer circuit, and more particularly, the above-mentioned three layers L1, L3 and L5. According to some embodiments, the circuit architecture 200 may comprise more layers of circuits.
For example, the PCB 100B may have a predetermined installation region 201 (e.g., an SoC installation region) for installing/mounting the processing circuit 110 (e.g., an SoC) as shown in the right half part of FIG. 3, and another predetermined installation region 202 (e.g., a memory installation region) for installing/mounting the random access memory 120 (e.g., an LPDDR5/5X random access memory) as shown in the left half part of FIG. 3, where the multiple pads 101 may be positioned within the predetermined installation region 201 (e.g., the SoC installation region) for coupling the processing circuit 110 (e.g., the SoC) to the PCB 100B, and the multiple pads 102 may be positioned within the predetermined installation region 202 (e.g., the memory installation region) for coupling the random access memory 120 (e.g., the LPDDR5/5X random access memory) to the PCB 100B. For better comprehension, the smaller rectangles outside the predetermined installation region 202 in the left half part of FIG. 3 may represent multiple other pads, and the associated boundaries surrounding these smaller rectangles may represent some other predetermined installation region on the PCB 100B for installing/mounting multiple other components (e.g., multiple resistors).

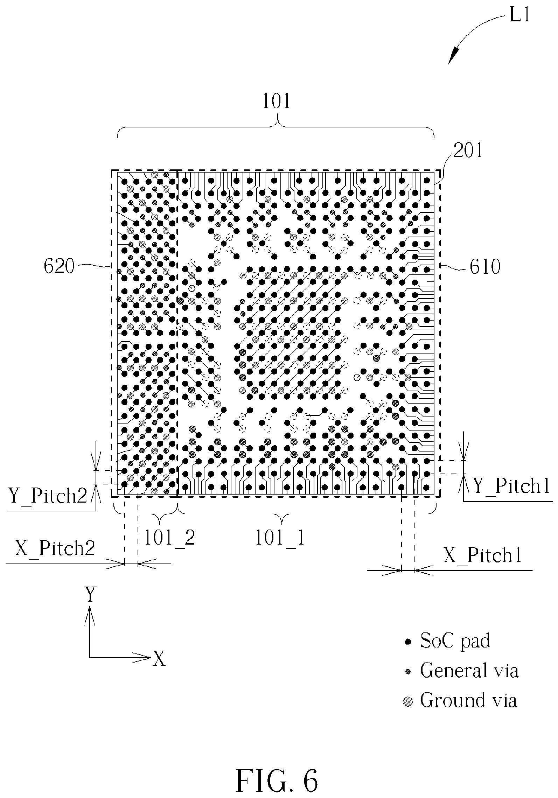

FIG. 6 illustrates some pitches involved with the circuit architecture control scheme shown in FIG. 2 according to an embodiment of the present invention. The processing circuit 110 may be implemented as the SoC, and the multiple pads 101 may also be referred to as multiple SoC pads 101. The predetermined installation region 201 such as the SoC installation region may comprise multiple sub-regions 610 and 620, and the multiple pads 101 may comprise multiple sets of pads 101_1 and 101_2 (or the SoC pads 101_1 and 101_2) positioned in the multiple sub-regions 610 and 620, respectively. For example, regarding the sub-region 610, the pitch X_Pitch1 of the set of pads 101_1 along the direction of the X-axis may be equal to a predetermined value such as 0.65 mm, and the pitch Y_Pitch1 of the set of pads 101_1 along the direction of the Y-axis may be equal to a predetermined value such as 0.65 mm, but the present invention is not limited thereto. In some examples, the pitch X_Pitch1 and/or the pitch Y_Pitch1 may vary. In addition, regarding the sub-region 620, the pitch X_Pitch2 of the set of pads 101_2 along the direction of the X-axis may be unequal to the pitch X_Pitch1, and the pitch Y_Pitch2 of the set of pads 101_2 along the direction of the Y-axis may be unequal to the pitch Y_Pitch1, to allow a layout space regarding at least one of a signal line and a via (e.g., a general via or a ground via) to be reserved between at least two adjacent pads among the set of pads 101_2, for coupling the processing circuit 110 to the random access memory 120 through the PCB 100B. For example, the pitch X_Pitch2 may be equal to a predetermined value such as 0.6 mm, and the pitch Y_Pitch2 may be equal to a predetermined value such as 0.7 mm, but the present invention is not limited thereto. In some examples, the pitch X_Pitch2 and/or the pitch Y_Pitch2 may vary.

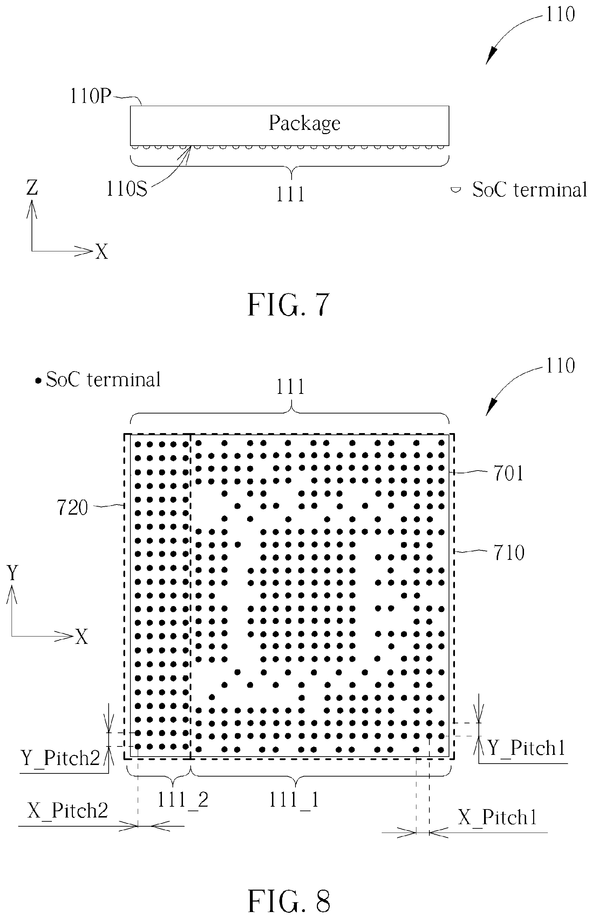

FIG. 7 illustrates some terminals involved with the circuit architecture control scheme shown in FIG. 2 according to an embodiment of the present invention, and FIG. 8 illustrates the associated pitches of the terminals shown in FIG. 7. The processing circuit 110 may be implemented as the SoC, and the aforementioned multiple terminals of the processing circuit 110, such as the multiple terminals 111, may also be referred to as multiple SoC terminals 111. As shown in FIG. 7, the multiple terminals 111 may be positioned on a predetermined surface 110S of a package 110P of the processing circuit 110, where the predetermined surface 110S may represent the surface (e.g., the bottom surface of the package 110P) that is closest to the PCB 100B when the processing circuit 110 is installed at/in the predetermined installation region 201 (e.g., the SoC installation region). In particular, the processing circuit 110 may have a terminal region 701 (not shown in FIG. 7) positioned on the predetermined surface 110S, such as an entire region of the predetermined surface 110S. For better comprehension, assume that an observer may see the package 110P as a see-through package and the multiple terminals 111 at the bottom of the package 110P from above (or from the +Z-axis), but the present invention is not limited thereto.

As shown in FIG. 8, the terminal region 701 may comprise multiple sub-regions 710 and 720, and the multiple terminals 111 may comprise multiple sets of terminals 111_1 and 111_2 (or the SoC terminals 111_1 and 111_2) positioned in the multiple sub-regions 710 and 720, respectively. For example, regarding the sub-region 710, the pitch X_Pitch1 of the set of terminals 111_1 along the direction of the X-axis may be equal to a predetermined value such as 0.65 mm, and the pitch Y_Pitch1 of the set of terminals 111_1 along the direction of the Y-axis may be equal to a predetermined value such as 0.65 mm, but the present invention is not limited thereto. In some examples, the pitch X_Pitch1 and/or the pitch Y_Pitch1 may vary. In addition, regarding the sub-region 720, the pitch X_Pitch2 of the set of terminals 111_2 along the direction of the X-axis may be unequal to the pitch X_Pitch1, and the pitch Y_Pitch2 of the set of terminals 111_2 along the direction of the Y-axis may be unequal to the pitch Y_Pitch1, to allow the layout space regarding the aforementioned at least one of the signal line and the via (e.g., the general via or the ground via) to be reserved between the aforementioned at least two adjacent pads among the set of pads 101_2 corresponding to the set of terminals 111_2, for coupling the processing circuit 110 to the random access memory 120 through the PCB 100B. For example, the pitch X_Pitch2 may be equal to a predetermined value such as 0.6 mm, and the pitch Y_Pitch2 may be equal to a predetermined value such as 0.7 mm, but the present invention is not limited thereto. In some examples, the pitch X_Pitch2 and/or the pitch Y_Pitch2 may vary.

Some implementation details regarding pitch setting may be further described as follows. The method may use X_Pitch2 = 0.6 mm and Y_Pitch2 = 0.7 mm to implement the associated layout for LPDDR5 design. Regarding the pitch Y_Pitch2 in the Y direction, as the space between two vias (e.g., general via(s) and/or ground via(s)) should be sufficient for routing a signal line, if the diameter $D_{drill}$ of the via drill is equal to 8 mils, the drill to copper clearance $D_{clearance}$ is equal to 8 mils and the minimum line/trace width $D_{trace}$ is equal to 3.5 mils, then the required minimum pitch $Y\_Pitch2_{Min}$ may be calculated as follows:

$$Y\_Pitch2_{Min} = D_{drill} + (D_{clearance} * 2) + D_{trace} = (8 + (8 * 2) + 3.5) \text{ mils} = 27.5 \text{ mils};$$

where 1 mil = (1 / 1000) inch, so $Y\_Pitch2_{Min}$ = 0.6985 mm. In the case of selecting/reserving one significant digit, 0.6985 ~= 0.7, which means that the method may use 0.7 mm as the predetermined value for setting the pitch Y_Pitch2, but the present invention is not limited thereto. Regarding the pitch X_Pitch2 in the X direction, as the space between four adjacent SoC ball pads along any diagonal among the diagonals of the rectangle defined by the respective center points of the four adjacent SoC ball pads should be sufficient for putting a via, if the diameter $D_{pad}$ of one SoC ball pad is equal to 0.3 mm, then the required length $D_{diagonal}$ of the diagonal may be calculated as follows:

$$D_{diagonal} = D_{pad} + (D_{clearance} * 2) + D_{drill} = 0.3 \text{ mm} + (8 * 3) \text{ mils} = 0.3 \text{ mm} + 24 \text{ mils};$$

where 1 mil = (1 / 1000) inch, so $D_{diagonal}$ = 0.9096 mm. Given that the diagonal divides this rectangle into two triangles, for any triangle among these two triangles, the required minimum pitch X_Pitch2$_{Min}$ may be calculated according to Pythagorean theorem as follows:

$$X\_Pitch2_{Min} = ((D_{diagonal}^2 - Y\_Pitch2^2))^{0.5} = ((0.9096^2 - 0.7^2))^{0.5} \text{ mm} \sim = 0.581 \text{ mm}.$$

In the case of selecting/reserving one significant digit, 0.581 ~= 0.6, which means that the method may use 0.6 mm as the predetermined value for setting the pitch X_Pitch2, but the present invention is not limited thereto. Taking the circuit structure 200 of the PCB 100B and the package 110P of the processing circuit 110 (or the SoC) as an example, as shown in FIG. 2 to FIG. 8, the LPDDR5 ball output on the left hand side of the SoC may be coupled to the multiple pads 102 (as well as the corresponding terminals of the LPDDR5/5X random access memory) through the associated connection lines toward/leading to the predetermined installation region 202, and may be implemented using X_Pitch2 = 0.6 mm and Y_Pitch2 = 0.7 mm.

Assuming that smaller vias are adopted, for example, $D_{drill}$ = 6 mils and $D_{pad}$ = 14 mils (or 0.3556 mm), when electronic devices are implemented in this manner, a common SoC ball pitch such as 0.65 mm may be used, but the PCB costs will increase. Regarding LPDDR5 signals, the present invention can use X_Pitch2 = 0.6 mm and Y_Pitch2 = 0.7 mm for designing the above-mentioned LPDDR5 ball output in order to achieve optimal configuration, but the present invention is not limited thereto. According to some embodiments, the predetermined value for setting the pitch X_Pitch2 and the predetermined value for setting the pitch Y_Pitch2 may vary. For example, the predetermined value for setting the pitch Y_Pitch2 may be any value in the interval [0.6985, 0.7] (in unit of mm), and the predetermined value for setting the pitch X_Pitch2 may be any value in the interval [0.581, 0.6] (in unit of mm). In another example, regarding the pitch Y_Pitch2 in the Y direction, if a smaller minimum line/trace width $D_{trace}$ is used, especially if the minimum line/trace width $D_{trace}$ is changed from 3.5 mils to 3.0 mils, then Y_Pitch2Min = 0.6858 mm, which means that the predetermined value for setting the pitch Y_Pitch2 may be any value in the interval [0.6858, 0.7] (in unit of mm), and the range of multiple candidate values that may be selected as this predetermined value may be expanded from the interval [0.6985, 0.7] to the interval [0.6858, 0.7] (in unit of mm). In yet another example, regarding the pitch X_Pitch2 in the X direction, if smaller SoC ball pads are used, especially if the diameter $D_{pad}$ of the SoC ball pads is changed from 0.3 mm to 0.25 mm, then X_Pitch2$_{Min}$ = 0.4989 mm, which means that the predetermined value for setting the pitch X_Pitch2 may be any value in the interval [0.4989, 0.6] (in unit of mm), and the range of multiple candidate values that may be selected as this predetermined value may be expanded from the interval [0.581, 0.6] to the interval [0.4989, 0.6] (in unit of mm). For brevity, similar descriptions for these embodiments are not repeated in detail here.

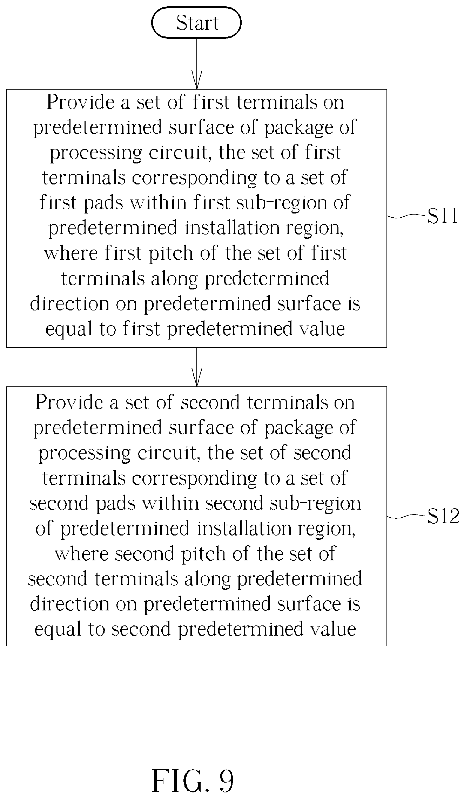

FIG. 9 illustrates a flowchart of the method according to an embodiment of the present invention. The processing circuit 110 (or the multiple terminals 111 in the terminal region 701 on the predetermined surface 110S of the package 110P) and the PCB 100B (or the multiple pads 101 in the predetermined installation region 201 thereon) may be implemented according to method.

In Step S11, provide a set of first terminals (e.g., the set of terminals 111_1) on the predetermined surface 110S of the package 110P of the processing circuit 110, the set of first terminals (e.g., the set of terminals 111_1) corresponding to a set of first pads (e.g., the set of pads 101_1) within a first sub-region (e.g., the sub-region 610) of the predetermined installation region 201, where a first pitch Pitch1 (e.g., the pitch X_Pitch1 or the pitch Y_Pitch1) of the set of first terminals such as the set of terminals 111_1 along a predetermined direction (e.g., the direction of the X-axis or the Y-axis) on the predetermined surface 110S is equal to a first predetermined value.

In Step S12, provide a set of second terminals (e.g., the set of terminals 111_2) on the predetermined surface 110S of the package 110P of the processing circuit 110, the set of second terminals (e.g., the set of terminals 111_2) corresponding to a set of second pads (e.g., the set of pads 101_2) within a second sub-region (e.g., the sub-region 620) of the predetermined installation region 201, where a second pitch Pitch2 (e.g., the pitch X_Pitch2 or the pitch Y_Pitch2) of the set of second terminals such as the set of terminals 111_2 along the predetermined direction (e.g., the direction of the X-axis or Y-axis) on the predetermined surface 110S is equal to a second predetermined value, and the second predetermined value is not equal to the first predetermined value.

For example, the second pitch Pitch2 (e.g., the pitch X_Pitch2 or the pitch Y_Pitch2) is different from the first pitch Pitch1 (e.g., the pitch X_Pitch1 or the pitch Y_Pitch1) to allow the layout space regarding at least one of a signal line and a via to be reserved between at least two adjacent second pads among the set of second pads (e.g., the set of pads 101_2), for coupling the processing circuit 110 to the random access memory 120 through the PCB 100B.

Based on the method, the PCB 100B may be arranged to install/mount the processing circuit 110 such as the SoC and the random access memory 120 such as an LPDDR 5 or above random access memory. The package 110P of the processing circuit 110 may comprise the multiple terminals 111 on the predetermined surface 110S, such as the set of terminals 111_1 positioned within the sub-region 710 of the terminal region 701 on the predetermined surface 110S that are arranged with the pitch X_Pitch1 along the direction of the X-axis and with the pitch Y_Pitch1 along the direction of the Y-axis, and the set of terminals 111_2 positioned within the sub-region 720 of the terminal region 701 on the predetermined surface 110S that are arranged with the pitch X_Pitch2 along the direction of the X-axis and with the pitch Y_Pitch2 along the direction of the Y-axis. In addition, the PCB 100B may comprise the multiple pads 101 on its top surface (e.g., the top surface of the top layer L1 within the above-mentioned five-layer circuit), such as the set of pads 101_1 positioned within the sub-region 610 of the predetermined installation region 201 on the top surface that are arranged with the pitch X_Pitch1 along the direction of the X-axis and with the pitch Y_Pitch1 along the direction of the Y-axis, and the set of pads 101_2 positioned within the sub-region 620 of the predetermined installation region 201 on the top surface that are arranged with the pitch X_Pitch2 along the direction of the X-axis and with the pitch Y_Pitch2 along the direction of the Y-axis. Additionally, the sub-region 710 of the terminal region 701 and the sub-region 610 of the predetermined installation region 201 correspond to each other, and the sub-region 720 of the terminal region 701 and the sub-region 620 of the predetermined installation region 201 correspond to each other.

In the 3D space corresponding to the X-axis, the Y-axis and the Z-axis that are orthogonal to each other, in a situation where the normal vector of the predetermined installation region 201 is parallel to the Z-axis and the processing circuit 110 and the random access memory 120 are arranged along the direction of the X-axis on the PCB 100B, the predetermined direction may represent the direction of any axis among the X-axis and the Y-axis. For example, when the predetermined direction represents the direction of the X axis, the first pitch Pitch1 may represent a first X pitch such as the pitch X_Pitch1, and the second pitch Pitch2 may represent a second X pitch such as the pitch X_Pitch2, where the second predetermined value may fall within the range of 0.4989 mm to 0.6 mm. In another example, when the predetermined direction represents the direction of the Y axis, the first pitch Pitch1 may represent a first Y pitch such as the pitch Y_Pitch1, and the second pitch Pitch2 may represent a second Y pitch such as the pitch Y_Pitch2, where the second predetermined value may fall within the range of 0.6858 mm to 0.7 mm. For brevity, similar descriptions for this embodiment are not repeated in detail here.

For better comprehension, the method may be illustrated with the working flow shown in FIG. 9. According to some embodiments, one or more steps may be added, deleted, or changed in the working flow shown in FIG. 9. For example, another first pitch Pitch1' (e.g., the pitch Y_Pitch1 or the pitch X_Pitch1) of the set of first terminals such as the set of terminals 111_1 along another predetermined direction (e.g., the direction of the Y-axis or the X-axis) on the predetermined surface 110S is equal to a third predetermined value, and another second pitch Pitch2' (e.g., the pitch Y_Pitch2 or the pitch X_Pitch2) of the set of second terminals such as the set of terminals 111_2 along the other predetermined direction (e.g., the direction of the Y-axis or the X-axis) on the predetermined surface 110S is equal to a fourth predetermined value, where the fourth predetermined value is not equal to the third predetermined value. When the predetermined direction represents the direction of the X axis and the other predetermined direction represents the direction of the Y axis, the first pitch Pitch1 may represent the first X pitch such as the pitch X_Pitch1, the second pitch Pitch2 may represent the second X pitch such as the pitch X_Pitch2, the other first pitch Pitch1' may represent the first Y pitch such as the pitch Y_Pitch1, and the other second pitch Pitch2' may represent the second Y pitch such as the pitch Y_Pitch2. In particular, the second predetermined value may fall within the range of 0.4989 mm to 0.6 mm, and the fourth predetermined value may fall within the range of 0.6858 mm to 0.7 mm. For brevity, similar descriptions for these embodiments are not repeated in detail here.

**Claims**

1.  A method of using optimized pitch for installing a processing circuit (110) at a printed circuit board (PCB) (100B), the PCB (100B) having a predetermined installation region (201) for installing the processing circuit (110), **characterized in that** the method comprises:

     providing a set of first terminals (111_1) on a predetermined surface (110S) of a package (110P) of the processing circuit (110), the set of first terminals (111_1) corresponding to a set of first pads (101_1) within a first sub-region (610) of the predetermined installation region (201), wherein a first pitch (X_Pitch1, Y_Pitch1) of the set of first terminals (111_1) along a predetermined direction on the predetermined surface (110S) is equal to a first predetermined value; and
     providing a set of second terminals (111_2) on the predetermined surface (110S) of the package (110P) of the processing circuit (110), the set of second terminals (111_2) corresponding to a set of second pads (101_2) within a second sub-region (620) of the predetermined installation region (201), wherein a second pitch (X_Pitch2, Y_Pitch2) of the set of second terminals (111_2) along the predetermined direction on the predetermined surface (110S) is equal to a second predetermined value, and the second predetermined value is not equal to the first predetermined value.

**2.** The method of claim 1, **characterized in that** the predetermined direction represents a direction of an X-axis, the first pitch (X _Pitch1) represents a first X pitch (X_Pitch1), and the second pitch (X_Pitch2) represents a second X pitch (X_Pitch2); and the second predetermined value falls within a range of 0.4989 millimeters (mm) to 0.6 mm.

**3.** The method of claim 2, **characterized in that** another first pitch (Y _Pitch1) of the set of first terminals (111_1) along another predetermined direction on the predetermined surface (110S) is equal to a third predetermined value, and another second pitch (Y_Pitch2) of the set of second terminals (111_2) along the other predetermined direction on the predetermined surface (110S) is equal to a fourth predetermined value; the other predetermined direction represents a direction of a Y-axis, the other first pitch (Y_Pitch1) represents a first Y pitch (Y_Pitch1), and the other second pitch (Y_Pitch2) represents a second Y pitch (Y _Pitch2); and the fourth predetermined value falls within a range of 0.6858 mm to 0.7 mm.

**4.** The method of claim 1, **characterized in that** the predetermined direction represents a direction of a Y-axis, the first pitch (Y_Pitch1) represents a first Y pitch (Y_Pitch1), and the second pitch (Y_Pitch2) represents a second Y pitch (Y _Pitch2); and the second predetermined value falls within a range of 0.6858 millimeters (mm) to 0.7 mm.

**5.** The method of claim 1, **characterized in that** another first pitch (Y_Pitch1, X _Pitch1) of the set of first terminals (111_1) along another predetermined direction on the predetermined surface (110S) is equal to a third predetermined value, and another second pitch (Y _Pitch2, X _Pitch2) of the set of second terminals (111_2) along the other predetermined direction on the predetermined surface (110S) is equal to a fourth predetermined value, wherein the fourth predetermined value is not equal to the third predetermined value.

**6.** The method of claim 1, **characterized in that** the second pitch (X_Pitch2, Y _Pitch2) is different from the first pitch (X _Pitch1, Y_Pitch1) to allow a layout space regarding at least one of a signal line and a via to be reserved between at least two adjacent second pads among the set of second pads (101_2), for coupling the processing circuit (110) to a random access memory (120) through the PCB (100B).

**7.** The method of claim 1, **characterized in that** the PCB (100B) is arranged to install the processing circuit (110) and a low-power double data rate (LPDDR) 5 or above random access memory (120).

**8.** The method of claim 1, **characterized in that** the PCB (100B) is arranged to install the processing circuit (110) and a random access memory (120); and in a three-dimensional (3D) space corresponding to an X-axis, a Y-axis and a Z-axis that are orthogonal to each other, in a situation where a normal vector of the predetermined installation region (201) is parallel to the Z-axis and the processing circuit (110) and the random access memory (120) are arranged along a direction of the X-axis on the PCB (100B), the predetermined direction represents a direction of any axis among the X-axis and the Y-axis.

**9.** A processing circuit (110) whose package (110P) is implemented according to the method of claim 1, **characterized in that** the package (110P) of the processing circuit (110) comprises:

the set of first terminals (111_1), positioned in a first sub-region (710) of a terminal region (701) on the predetermined surface (110S), wherein the first sub-region (710) of the terminal region (701) and the first sub-region (610) of the predetermined installation region (201) correspond to each other; and
the set of second terminals (111_2), positioned in a second sub-region (720) of the terminal region (701) on the predetermined surface (110S), wherein the second sub-region (720) of the terminal region (701) and the second sub-region (620) of the predetermined installation region (201) correspond to each other.

**10.** A printed circuit board (PCB) (100B) whose multiple pads (101_1, 101_2) are implemented according to the method of claim 1, **characterized in that** the multiple pads (101_1, 101_2) of the PCB (100B) comprise:

the set of first pads (101_1), positioned in the first sub-region (610) of the predetermined installation region (201); and
the set of second pads (101_2), positioned in the second sub-region (620) of the predetermined installation region (201).

FIG. 1

EP 4 679 945 A1

102    101    200

202    202

201

Y
X

FIG. 2

FIG. 3

FIG. 4

EP 4 679 945 A1

**FIG. 5**

FIG. 6

FIG. 7

FIG. 8

Start

Provide a set of first terminals on predetermined surface of package of processing circuit, the set of first terminals corresponding to a set of first pads within first sub-region of predetermined installation region, where first pitch of the set of first terminals along predetermined direction on predetermined surface is equal to first predetermined value ⌐S11

Provide a set of second terminals on predetermined surface of package of processing circuit, the set of second terminals corresponding to a set of second pads within second sub-region of predetermined installation region, where second pitch of the set of second terminals along predetermined direction on predetermined surface is equal to second predetermined value ⌐S12

FIG. 9

Europäisches
Patentamt

European
Patent Office

Office européen
des brevets

# EUROPEAN SEARCH REPORT

**Application Number**

EP 25 17 3079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/078071 A1 (ZTE CORP [CN]) 29 April 2021 (2021-04-29) * page 3, last 4 lines - page 4, line 17 * * page 5, line 22 - line 23 * * figures 1-7 * * claim 9 * | 1-10 | INV. H05K1/11 H01L23/498 |
| X | CN 114 464 585 A (FEITENG INFORMATION TECH LIMITED COMPANY) 10 May 2022 (2022-05-10) * paragraph [0062] - paragraph [0066] * * paragraph [0081] - paragraph [0082] * * figures 6-10, 13 * * claims 1, 4, 5 * | 1-10 | |

**TECHNICAL FIELDS SEARCHED (IPC)**

H05K
H01L

The present search report has been drawn up for all claims

| Place of search | Date of completion of the search | Examiner |
|---|---|---|
| The Hague | 16 October 2025 | Cornelussen, Ronald |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 3079

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2025

| Patent document cited in search report | Publication date | Patent family member(s) | Publication date |
|---|---|---|---|
| WO 2021078071 A1 | 29-04-2021 | CN 112701099 A<br>WO 2021078071 A1 | 23-04-2021<br>29-04-2021 |
| CN 114464585 A | 10-05-2022 | NONE | |

EPO FORM P0459